(19) Europäisches Patentamt

European Patent Office

Office européen des brevets

(11) **EP 2 474 982 A2**

(12) **EUROPEAN PATENT APPLICATION**

(43) Date of publication:
**11.07.2012 Bulletin 2012/28**

(21) Application number: **12150369.2**

(22) Date of filing: **06.01.2012**

(51) Int Cl.:
*G21C 17/017* (2006.01)     *B23K 31/00* (2006.01)
*G01N 29/07* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.01.2011 JP 2011002945**

(71) Applicant: **Mitsubishi Heavy Industries, Ltd.
Tokyo 108-8215 (JP)**

(72) Inventors:
• **Kawase, Naoto**
  **Tokyo (JP)**
• **Seki, Isao**
  **Tokyo (JP)**
• **Matsuura, Takayuki**
  **Tokyo (JP)**

(74) Representative: **Intès, Didier Gérard André et al
Cabinet Beau de Loménie
158, rue de l'Université
75340 Paris Cedex 07 (FR)**

(54) **Construction method, tubular member, and nuclear power plant**

(57)     A construction method of a pipeline that forms a pipeline by joining tubular members to each other by butt welding, includes: a tubular member preparation step for preparing a tubular member (10,11) having a smooth length of an outer surface (5) along an axial direction (O1) from a joined end (10a,11a), which is set based on conditions of ultrasonic inspection of a welded portion (M), which are determined by usage condition of the pipeline (R); a tubular member welding step for welding together prepared tubular member (10,11); and a welded portion inspection step for inspecting a welded portion (M) by ultrasonic inspection.

FIG. 1

**Description**

BACKGROUND OF THE INVENTION

Field of the Invention

The present invention relates to a pipeline construction method, a tubular member, and a nuclear power plant that is furnished with the tubular member.

Description of Related Art

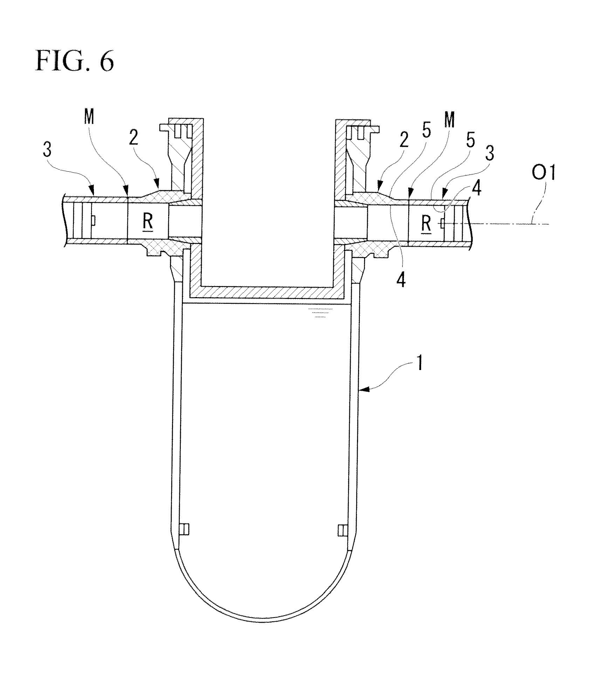

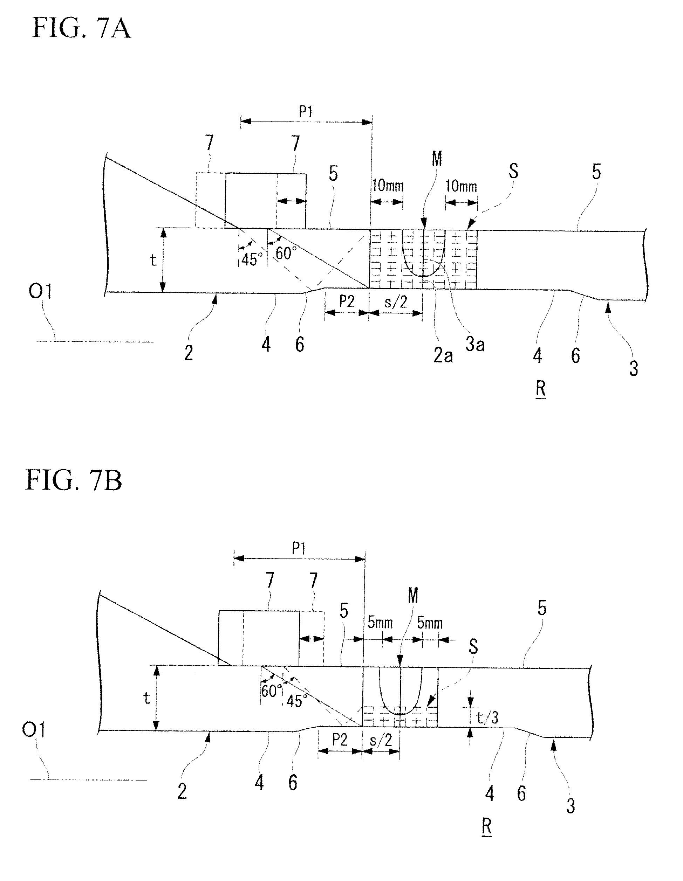

At nuclear power plants for power generation, inspections are periodically performed in order to ensure the safety and the reliability thereof. Further, the structures, the systems, and the equipment of the nuclear power plant are classified according to the importance of their safety features, and the "Standards for Nuclear Power Plants: Maintenance Standards" published by the Japan Society of Mechanical Engineers is applied to maintenance control operations and the like, of these classified structures, systems, and equipment.
Moreover, non-destructive inspection is applied to the inspection of piping, pressure vessel, and the like, of the nuclear power plant, and with regard to welded portions M where tubular members are joined to each other by butt welding, such as with piping to piping, nozzle 2 of a nuclear reactor pressure vessel 1 to piping 3, or a valve to piping, the inspection method and the inspection area are prescribed according to the "Standards for Nuclear Powder Plants: Maintenance Standards" (refer to FIG. 6).
More specifically, it is prescribed that, with regard to the welded portion M of both of the tubular members 2 and 3 of the nuclear power plant, the inspection thereon is performed by ultrasonic inspection (refer to Patent Document I for example). Furthermore, in clasps I where the importance of safety features is high (equipment that constitutes the nuclear reactor coolant pressure boundary (vessels, piping, pumps, valves) for example), as shown in FIG. 7A, it is prescribed that the inspection is performed with the entire plate thickness t from the inner surface 4 to the outer surface 5 of the welded portion M as the flaw inspection area S. Moreover, in class 2 where the importance of the safety features is lower than in class 1, as shown in FIG. 7B, it is prescribed that the inspection is performed with a plate thickness area of 1/3 of the designed plate thickness t from the inner surface 4 of the welded portion M as the flaw inspection area S.

[Prior Art Documents]

[Patent Documents]

[Patent Document 1] Japanese Unexamined Patent Application, First Publication No. 2005-221265.

SUMMARY OF THE INVENTION

[Problems to be Solved by the Intention]

For example, as shown in FIG. 6, FIG. 7A, and FIG. 7B, with regard to the nozzle 2 provided on the nuclear reactor pressure vessel 1. and the piping 3 that forms a pipeline R by butt wielding to this nozzle 2 (both the nozzle 2 and the piping 3 being tubular members), in order to lower the fluid resistance within the pipeline R as much as possible, thinning processing is performed on the inner surfaces 4 on the joined end 2a and 3a sides of one or both of the tubular members 2 and 3 such that the inner surfaces 4 are formed mutually flush. Therefore, on the tubular members 2 and 3, a tapered surface 6 is formed on the inner surfaces 4 on the joined end 2a and 3a sides that have been thinning processed. Then, at the time of inspecting the welded portion M of both such tubular members 2 and 3, the presence of defects in the flaw inspection area S of the welded portion M is detected by delivering ultrasonic waves to the flaw inspection area S directly or by reflection at the inner surfaces 4 (interfaces) of the tubular members 2 and 3, while scanning (moving) a probe 7 on the outer surfaces 5 of the tubular members 2 and 3.
However, conventionally, the tubular members of the nuclear power plant, such as the nozzle 2 of the nuclear reactor pressure vessel 1 and the piping 3 that is butt welded to this nozzle 2, are not necessarily formed (manufactured or designed) with consideration to the inspection of the welded portion M by ultrasonic inspection following construction. Therefore there are cases where the length of the smooth section (linear portion) P1 of the outer surfaces 5 that extend in the axis O1 direction from the joined ends 2a and 3a of the tubular members 2 and 3 is short, and the probe 7 cannot be scanned on the outer surfaces 5 of the tubular members 2 and 3 such that the entire flaw inspection area S is covered. Furthermore, there are cases where the tapered surface 6 is present on a section near the joined ends 2a and 3a as a result of thinning processing, so that the length of the smooth section (linear portion) P2 of the inner surfaces 4 that extend in the axis O1 direction from the joined ends 2a and 3a of the tubular members 2 and 3 is short, and hence the path of the ultrasonic waves becomes complicated due to reflections, making it difficult to ensure inspection accuracy, or the ultrasonic waves cannot be delivered to the entire flaw inspection area S.

[Means for Solving the Problem]

The construction method of a pipeline of the present invention, is a construction method of a pipeline that forms a pipeline by joining tubular members to each other by butt welding, and includes: a tubular member preparation step for preparing a tubular member having a smooth length of an outer surface along an axial direction from a joined end, which is set based on conditions of ultrasonic inspection of a welded portion, which are determined by usage conditions of the pipeline; a tubular member welding step for welding together prepared tubular members; and a welded portion inspection step for inspecting a welded portion by ultrasonic inspection.

The tubular members of the present invention are tubular members that are joined by butt welding to form a pipeline, and have a smooth length of an outer surface along an axial direction from a joined end, which is set based on conditions of ultrasonic inspection of a welded portion, which are determined by usage conditions of the pipeline.

The nuclear powder plant of the present invention is furnished with the tubular member mentioned above as a nozzle.

In these aspects of the invention, for example, tubular members for which the smooth length of the outer surface is set based on conditions for ultrasonic inspection of the welded portion, which are determined by the usage conditions of the class 1 or class 2 pipeline, which is classified according to the importance of safety features of the nuclear power plant, are prepared in the tubular member preparation step, and utilized in the construction.

That is to say, the tubular members are formed (deigned) with the smooth length of the outer surface set beforehand, so that at the time of performing ultrasonic inspection of the welded portion by scanning a probe transmitting ultrasonic waves on the outer surface of the tubular member, for class 1, a flaw inspection area of the entire plate thickness from the inner surface to the outer surface of the welded portion can be inspected, and for class 2, a flaw inspection area of a plate thickness area of 1/3 of the designed plate thickness from the inner surface of the welded portion can be inspected.

[Effects of the Intention]

In the pipeline construction method, the tubular members, and the nuclear power plant of the present invention, the tubular members can be welded to each other in the tubular member wielding step, such that the conditions for the ultrasonic inspection of the welded portion, which are determined by the usage conditions of the pipeline, can be satisfied with certainty. Furthermore, at the time of executing the ultrasonic inspection on the welded portion in the welded portion inspection step, since the smooth length of the outer surface (linear portion) of the tubular member is sufficiently ensured, the probe can be scanned on the outer surfaces of the tubular member such that the entire flaw inspection area is covered, and areas in which flaws are not detectable are eliminated, and it becones possible to perform inspection of the wielded portion certainly and favorably. Therefore, it becomes possible to join the tubular members to each other by forming a welded portion with a high reliability.

DESCRIPTION OF THE DRAWINGS

FIG. 1 is a cross-sectional view showing tubular members (welded portion) of a nuclear power plant according to an embodiment of the present invention.

FIG. 2 is a cross-sectionat view showing tubular members (welded portion) of a nuclear power plant according to an embodiment of the present invention.

FIG. 3 is a diagram showing a method for designing an outer surface smooth length of a tubular member of a nuclear power plant according to an embodiment of the present invention.

FIG. 4 is a diagram showing a method for designing an inner surface smooth length of a tubular member of a nuclear power plant according to an embodiment of the present invention.

FIG. 5 is a diagram showing a state in which ultrasonic inspection is being performed with an R-shaped probe.

FIG. 6 is a diagram showing a nuclear reactor pressure vessel (nuclear power plant).

FIG. 7A and FIG. 7B are cross-sectional views both showing tubular members (welded portion) of a conventional nuclear power plant.

DETAILED DESCRIPTION OF THE INVENTION

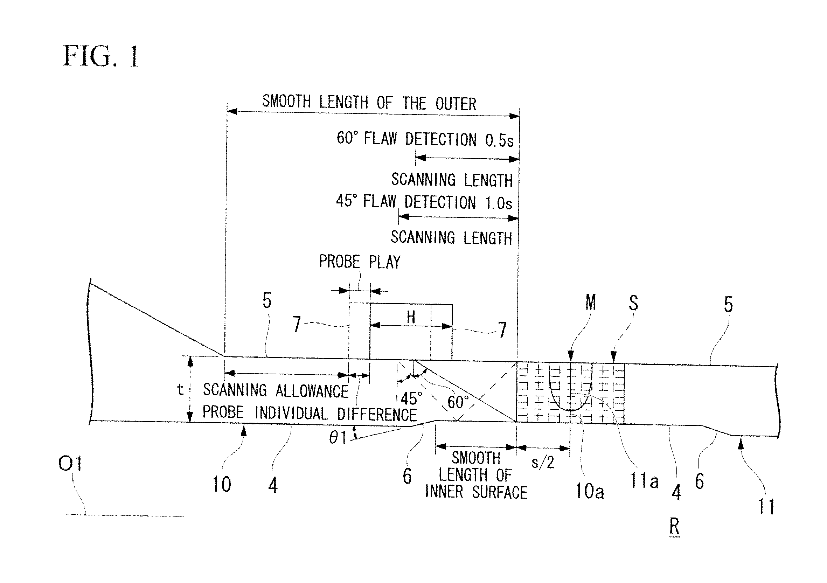

Hereunder, is a description of a pipeline construction method, tubular members, and a nuclear power plant, according to an embodiment of the present invention, with reference to FIG. 1 to FIG. 4, and FIG. 6. Here, in the present embodiment, the description is given assuming that the tubular members are tubular members are joined by butt welding to form a pipeline R of a nuclear plant 1.

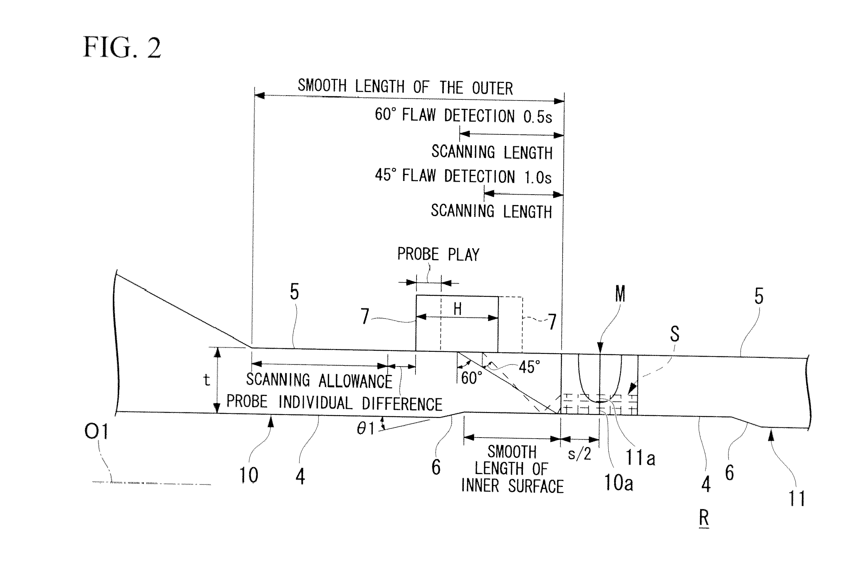

With regard to the tubular members 10 and 11 that are joined by butt welding in the present embodiment, as shown in FIG. 1 and FIG. 2, thinning processing is performed on the inner surfaces 4 on the joined end 10a and 11a sides in order to reduce the fluid resistance within the pipeline R as much as possible, and the inner surfaces 4 of the tubular members 10 and 11 to be joined to each other are formed such that they become flush. As a result, by thinning processing the inner surfaces 4 on the joined end 10a and 11a sides, the tubular members 10 and 11 can be formed such that they have a smooth section of the inner surface 4 which extends along the axis O1 direction from the joined ends 10a and 11a, and a tapered surface 6 which connects between this smooth section and the inside of the inner surface 4 which has not been thinning processed.

Furthermore, in these tubular members 10 and 11, an inner surface thinning angle θ1 of the tapered surface 6 is formed not exceeding a fixed angle so that mode changes in the sound waves at the time of inner surface reflection are unlikely to occur.

Moreover, in the present embodiment, the tubular members 10 and 11 are formed (designed) such that; the length of the smooth section of the outer surfaces 5 that extend along the axis O1 direction from the joined ends 10a and 11a (outer surface smooth length, length of the linear portion), and the length of the smooth section of the inner surfaces 4 that extend along the axis O1 direction from the joined ends 10a and 11a (inner surface smooth length, length of the linear portion) are respectively set based on the conditions of ultrasonic inspection of the welded portion M, which are determined by the usage conditions of the pipeline R.

More specifically, in the present embodiment, the usage conditions of the pipeline R are set according to class 1 and class 2 (class 1 equipment and class 2 equipment), in which the structures, the systems, and the equipment of the nuclear power plant 1 are classified according to the importance of their safety features. Class 1 represents the equipment (vessels, pipes, pumps, and values) and the like that constitute the nuclear reactor coolant pressure boundary. The pair of tubular members 10 and 11 of this class 1 that are joined by butt welding are for example the nozzle provide on the nuclear reactor pressure vessel 1 and the pipeline that is joined to this nozzle. Furthermore, class 2 represents the equipment (vessel, pipes, pumps, valves) and the like for which the importance of the safety features is lower than class 1.

Moreover, in the present embodiment, the conditions for ultrasonic inspection of the welded portion M, which are determined by the usage conditions of such a pipeline R, are the areas of inspection prescribed by the "Standards for Nuclear Power Plants:

Maintenance Standards" mentioned above. That is to say, under the conditions of class 1, as shown in FIG. 1, the entire plate thickness t from the inner surface 4 to the outer surface 5 of the welded portion M is made the flaw inspection area S, and under the conditions of class 2, as shown in FIG. 2, a plate thickness area of 1/3 of the designed plate thickness t from the inner surface 4 of the welded portion M is made the flaw inspection area S.

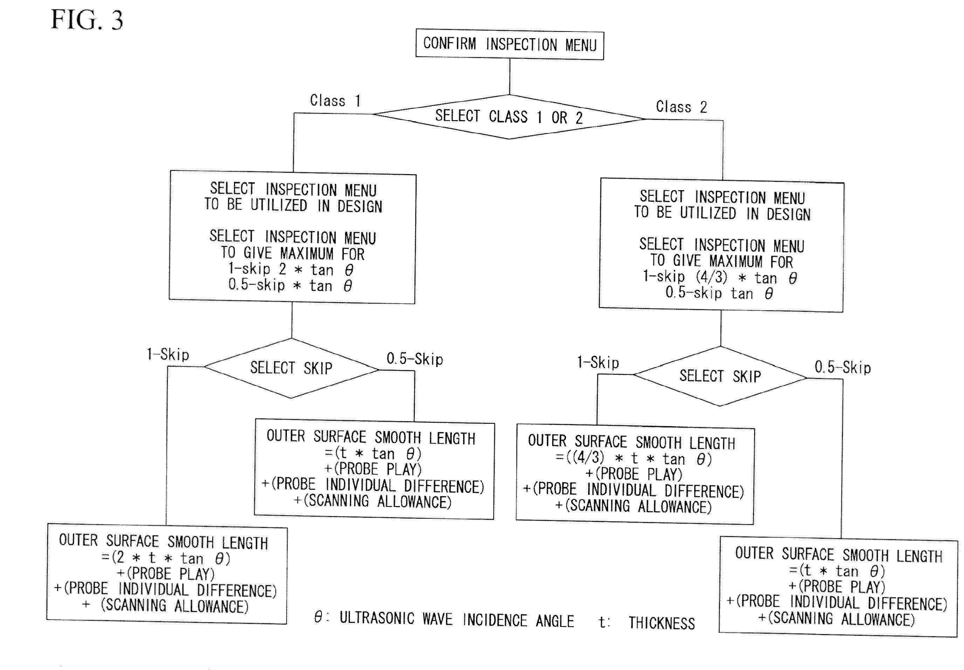

Then, based on such conditions for ultrasonic inspection of the welded portion M, at the time of setting the smooth length of the outer surface 5 (in the design method for the smooth length of the outer surface 5), as shown in FIG. 3, selection between class 1 and class 2 is performed, and in the selected class, selection is made of an inspection menu to be utilized in the design.

At this time, in a case where class 1 is selected, an inspection menu is Selected so that in the ultrasonic inspection, 2 tan 0 at the time of a 1-skip flaw detection, and tan θ at the time of a 0.5-skip flaw detection, become a maximum. On the other hand, in a case where class 2 is selected, an inspection menu is selected so that in the ultrasonic inspection, (4/3) tan θ at the time of a 1-skip flaw detection, and tan θ at the time of a 0.5-skip flaw detection, become a maximum.

Here, θ represents the ultrasonic wave incidence angle. Furthermore, 1-skip in ultrasonic inspection means that the ultrasonic waves are delivered to the flaw inspection area S (welded portion M) of the inspected site by entering from the outer surface 5 (end face) of the tubular members 10 and 11 and being reflected once at the inner surface 4, and 0.5-skip means that the ultrasonic waves are delivered directly to the flaw inspection area S (welded portion M) of the inspected site, by entering from the outer surface 5 of the tubular members 10 and 11.

Next, the skip selection is performed. In a case where class 1 is selected and 1-skip is selected, the outer surface smooth length L1 (mm) is calculated by formula (1), and in a case where class is selected and 0.5-skip is selected, the outer surface smooth length L2 (mm) is calculated by formula (2). Furthermore, in a case where class 2 is selected and 1-skip is selected, the outer surface smooth length L3 (mm) is calculated by formula (3), and in a case where class 2 is selected and 0.5-skip is selected, the outer surface smooth length L4 (mm) is calculated by formula (4). Here t (mm) represents the thickness (design plate thickness) of the tubular member.

$$L1 = (2 \times t \times \tan \theta) + (\text{probe play}) + (\text{probe individual difference}) + (\text{scanning allowance}) \cdots (1)$$

$$L2 = (t \times \tan \theta) + (\text{probe play}) + (\text{probe individual difference}) + (\text{scanning allowance}) \cdots (2)$$

$$L3 = ((4/3) \times t \times \tan \theta) + (\text{probe play}) + (\text{probe individual difference}) + (\text{scanning allowance}) \cdots (3)$$

$$L4 = (t \times \tan \theta) + (\text{probe play}) + (\text{probe individual difference}) + (\text{scanning allowance}) \cdots (4)$$

By so doing, it is possible to provide a method that prescribes the outer surface smooth lengths L1 to L4 with respect to a variety of combinations of the plate thickness t and the ultrasonic wave incidence angle θ.

Furthermore, at this time, it is desirable to use the axial length H of the probe 7 in the calculation of the (probe play), the (probe individual difference), and the (scanning allowance). For example, the probe axial length is made H (mm), and the (probe play) = H/2, the (probe individual difference) = H/2, and the (scanning allowance) = H/2. As a result, it is possible to provide a simple and valid prescription method for the (probe play), the (probe individual difference), and the (scanning allowance).

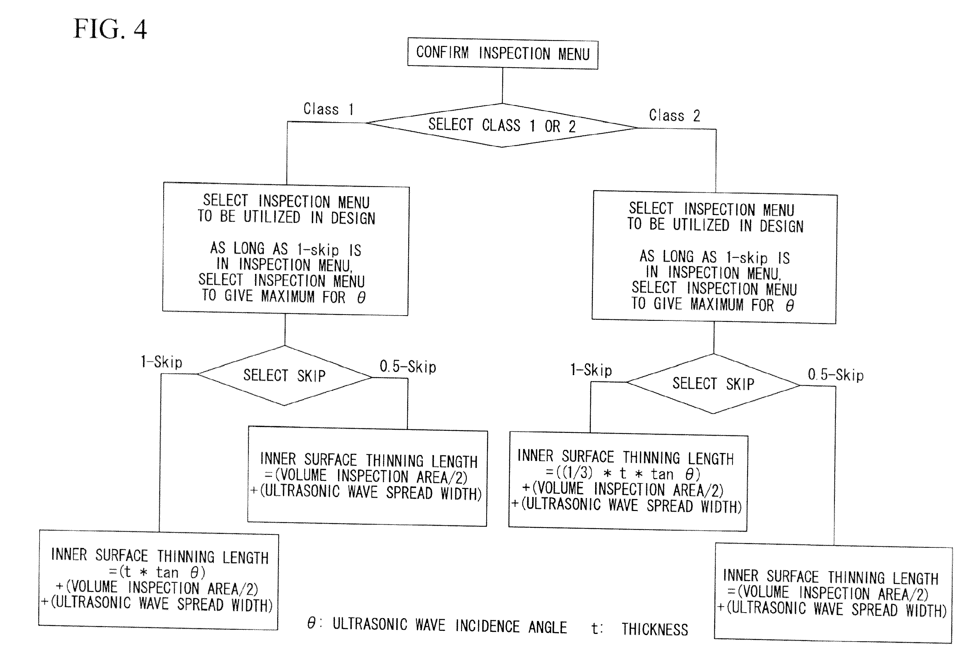

On the other hand, at the time of setting the inner surface smooth length (length of the inner surface thinning) based on the conditions of the ultrasonic inspection of the welded portion mentioned above (design method for the inner surface smooth length), then as shown in FIG. 4, class 1 or class 2 is selected, and the inspection menu in the selected class utilized in the design is selected.

At this time, irrespective of whether class 1 or class 2 is selected, as long as there is a 1-skip in the inspection menu, the inspection menu in which the ultrasonic wave incidence angle θ becomes a maximum is selected.

Next, the skip selection is performed, In a case where class 1 is selected and 1-skip is selected, the inner surface smooth length L5 (mm) is calculated by formula (5), and in a case where class 1 is selected and 0.5-skip is selected, the inner surface smooth length L6 (mm) is calculated by formula (6). Furthermore, in a case where class 2 is selected and 1-skip is selected, the inner surface smooth length L7 (mm) is calculated by formula (7), and in a case where class 2 is selected and 0.5-skip is selected, the inner surface smooth length L8 (mm) is calculated by formula (8).

$$L5 = (t \times \tan \theta) + (\text{flaw inspection area}/2) + (\text{ultrasonic wave spread width}) \cdots (5)$$

$$L6 = (\text{flaw inspection area}/2) + (\text{ultrasonic wave spread width}) \cdots (6)$$

$$L7 = ((1/3) \times t \times \tan \theta) + (\text{flaw inspection area}/2) + (\text{ultrasonic wave spread width})$$

$$\cdots (7)$$

$$L8 = (\text{flaw inspection area}/2) + (\text{ultrasonic wave spread width}) \cdots (8)$$

As a result, it is possible to provide a method that prescribes the inner surface smooth lengths L5 to L8 with respect to a variety of combinations of the plate thickness t and the ultrasonic wave incidence angle θ.

Furthermore, at this time, it is desirable to make the ultrasonic wave spread with the size of the oscillator of the probe 7.

By so doing, it is possible to provide a valid and a simple index value for the ultrasonic wave spread width.

In the present embodiment, as described above, the tubular members 10 and 11 for which the outer surface smooth lengths L1 to L4 and the inner surface smooth lengths L5 to L8 have been set based on the conditions of the ultrasonic inspection of the welded portion M, which is determined according to the usage conditions of the pipeline R, are prepared in the tubular member preparation step, the prepared tubular members 10 and 11 are welded to each other in the tubular member welding step, and the welded portion M is inspected by executing the ultrasonic inspection in the welded portion inspection step.

At this time, the tubular members 10 and 11 are formed (designed) with the outer surface smooth lengths L1 to L4, the inner surface smooth lengths L5 to L8, and the inner surface thinning angle θ1 set beforehand, so that when the ultrasonic inspection of the welded portion M is performed by scanning the probe 7 transmitting ultrasonic waves on the outer surfaces 5 of the tubular members 10 and 11, for class 1, as shown in FIG. 1, a flaw inspection area S of the entire plate thickness t from the inner surface 4 to the outer surface 5 of the welded portion M can be inspected, and for class 2, as shown in FIG. 2, a flaw inspection area S of a plate thickness area of 1/3 of the designed plate thickness t from the inner surface 4 of the welded portion M can be inspected.

At a result, in the pipeline R construction method, the tubular members 10 and 11, and the nuclear power plant of the present embodiment, the tubular members 10 and I can be welded to each other in the tubular member welding step, such that the conditions for the ultrasonic inspection of the welded portion M. which are determined by the usage conditions of the pipeline R, can be satisfied with certainty.

Furthermore, at the time of executing the ultrasonic inspection on the welded portion M in the welded portion inspection step, since the outer surface smooth lengths L1 to L4 of the tubular members 10 and 11 are sufficiently ensured, the probe 7 can be scanned on the outer surfaces 5 of the tubular members 10 and 11 such that the entire flaw inspection area S is covered, and areas in which flaws are not detectable are eliminated, and it becomes possible to perform inspection of the welded portion M certainty and favourably.

Moreover, at the time of executing the ultrasonic inspection on the welded portion M, in addition to the outer surface smooth lengths L1 to L4 of the tubular members 10 and 11, the inner surface smooth lengths L5 to L8 are also sufficiency ensured. Furthermore, the inner surface thinning angle θ1 is formed not exceeding a fixed angle so that mode changes in the sound waves at the time of inner surface reflection are unlikely to occur. As a result, there is no longer the situation where the path of the ultrasonic waves becomes complicated due to reflections, or the ultrasonic waves cannot be delivered to the entire flaw inspection area S.

Therefore, according to the pipeline R construction method, the tubular members 10 and 11 and the nuclear power plant of the present embodiment, it becomes possible two join the tubular members 10 and 11 to each other by forming a welded portion M with a high reliability.

The foregoing has described an embodiment of the pipeline construction method, the tabular members, and the nuclear power plant according to the present invention. However the present invention is in no way limited to the embodiment mentioned above, and appropriate changes are possible within a scope that does not depart from the gist thereof.

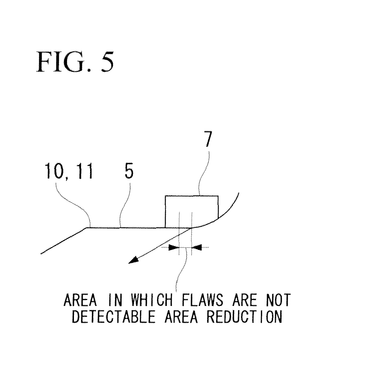

For example, as shown in FIG. 5, an R-shaped probe furnished with a curved surface may be used, and the (probe play) at the time of the calculation of the outer surface smooth lengths L1 to L4 may be made smaller than H/2. In this case, it becomes possible to achieve a reduction in the necessary outer surface smooth lengths L1 to L4.

Furthermore, in the case of a subject where the inspection is performed by combining a plurality of methods with different ultrasonic wave incidence angles θi and skips, a combination of the following formulas (9) to (12) that gives the largest value may be utilized in designing the outer surface smooth lengths L1 to L4. Here, in the case of class 1 formula (9) represents a 1-skip inspection and formula (10) represents a 0.5-skip inspection. Furthermore, in the case of class 2, formula (11) represents a 1-skip inspection and formula (12) represents a 0.5-skip inspection. In such a manner, even in a case where a plurality of methods is combined, it becomes possible to simply determine the conditions that become the most constraining.

$$2 \times \tan \theta i \cdots (9)$$

$$1 \times \tan \theta i \cdots (10)$$

$$4/3 \times \tan \theta i \cdots (11)$$

$$1 \times \tan \theta i \cdots (12)$$

**Claims**

1. A construction method of a pipeline that forms pipeline by joining tubular members to each other by butt welding, comprising:

   a tubular member preparation step for preparing a tubular member (10, 11) having a smooth length of an outer surface (5) along an axial direction (O1) from a joined end (10a, 11a), which is set based on conditions of ultrasonic inspection of a welded portion (M), which are determined by usage conditions of said pipeline (R);
   a tubular member welding step for welding together prepared tubular members (10,11); and
   a welded portion inspection step for inspecting a welded portion (M) by ultrasonic inspection.

2. A construction method of a pipeline according to claim 1, wherein, in said tubular member preparation step there is provide a tubular member (10,11) having said outer surface smooth length, and an inner surface smooth length along an axial direction (O1) from a joined end (10a, 10b), which is set based on conditions of ultrasonic inspection of a welded portion (M), which are determined by usage conditions of said pipeline (R).

3. A construction method of a pipeline according to claim 1 or 2, wherein a probe (7) used in said ultrasonic inspection is an R-shaped probe furnished with a curved surface.

4. Tubular members (10, 11) that are joined by butt welding to form a pipeline (R), and have a smooth length of an outer surface (5) along an axial direction (O1) from a joined end (10a, 11a) which is set based on conditions of ultrasonic inspection of a welded portion (M), which are determined by usage conditions of said pipeline (R).

5. Tubular members according to claim 4, that have said outer surface smooth length, and an inner surface smooth length along an axial direction (O1) from a joined end (10a, 11a) which is set based on conditions of ultrasonic inspection of a welded portion which are determined by usage conditions of pipeline (R).

6. A nuclear power plant (1) furnished with a tubular member according to claim 4 or 5 as a nozzle.

FIG. 1

SMOOTH LENGTH OF THE OUTER

60° FLAW DETECTION 0.5s
SCANNING LENGTH

45° FLAW DETECTION 1.0s
SCANNING LENGTH

PROBE PLAY

5
7          H          7
M   S      5

t  SCANNING ALLOWANCE
PROBE INDIVIDUAL DIFFERENCE
45°   60°

O1
θ1

10   4        6   SMOOTH
LENGTH OF
INNER SURFACE
s/2
10a  11a  4  6
11

R

EP 2 474 982 A2

9

FIG. 2

# FIG. 3

CONFIRM INSPECTION MENU

Class 1 — SELECT CLASS 1 OR 2 — Class 2

**Class 1:**

SELECT INSPECTION MENU
TO BE UTILIZED IN DESIGN

SELECT INSPECTION MENU
TO GIVE MAXIMUM FOR
1-skip $2 * \tan \theta$
0.5-skip $* \tan \theta$

1-Skip — SELECT SKIP — 0.5-Skip

0.5-Skip:

OUTER SURFACE SMOOTH LENGTH
$= (t * \tan \theta)$
$+ (\text{PROBE PLAY})$
$+ (\text{PROBE INDIVIDUAL DIFFERENCE})$
$+ (\text{SCANNING ALLOWANCE})$

1-Skip:

OUTER SURFACE SMOOTH LENGTH
$= (2 * t * \tan \theta)$
$+ (\text{PROBE PLAY})$
$+ (\text{PROBE INDIVIDUAL DIFFERENCE})$
$+ (\text{SCANNING ALLOWANCE})$

**Class 2:**

SELECT INSPECTION MENU
TO BE UTILIZED IN DESIGN

SELECT INSPECTION MENU
TO GIVE MAXIMUM FOR
1-skip $(4/3) * \tan \theta$
0.5-skip $\tan \theta$

1-Skip — SELECT SKIP — 0.5-Skip

1-Skip:

OUTER SURFACE SMOOTH LENGTH
$= ((4/3) * t * \tan \theta)$
$+ (\text{PROBE PLAY})$
$+ (\text{PROBE INDIVIDUAL DIFFERENCE})$
$+ (\text{SCANNING ALLOWANCE})$

0.5-Skip:

OUTER SURFACE SMOOTH LENGTH
$= (t * \tan \theta)$
$+ (\text{PROBE PLAY})$
$+ (\text{PROBE INDIVIDUAL DIFFERENCE})$
$+ (\text{SCANNING ALLOWANCE})$

$\theta$: ULTRASONIC WAVE INCIDENCE ANGLE   t: THICKNESS

EP 2 474 982 A2

FIG. 4

CONFIRM INSPECTION MENU

SELECT CLASS 1 OR 2

Class 1

Class 2

SELECT INSPECTION MENU
TO BE UTILIZED IN DESIGN

AS LONG AS 1-skip IS
IN INSPECTION MENU,
SELECT INSPECTION MENU
TO GIVE MAXIMUM FOR $\theta$

SELECT INSPECTION MENU
TO BE UTILIZED IN DESIGN

AS LONG AS 1-skip IS
IN INSPECTION MENU,
SELECT INSPECTION MENU
TO GIVE MAXIMUM FOR $\theta$

SELECT SKIP

1-Skip

0.5-Skip

SELECT SKIP

1-Skip

0.5-Skip

INNER SURFACE THINNING LENGTH
=(VOLUME INSPECTION AREA/2)
+(ULTRASONIC WAVE SPREAD WIDTH)

INNER SURFACE THINNING LENGTH
=((1/3) * t * tan $\theta$)
+(VOLUME INSPECTION AREA/2)
+(ULTRASONIC WAVE SPREAD WIDTH)

INNER SURFACE THINNING LENGTH
=(t * tan $\theta$)
+(VOLUME INSPECTION AREA/2)
+(ULTRASONIC WAVE SPREAD WIDTH)

INNER SURFACE THINNING LENGTH
=(VOLUME INSPECTION AREA/2)
+(ULTRASONIC WAVE SPREAD WIDTH)

$\theta$: ULTRASONIC WAVE INCIDENCE ANGLE    t: THICKNESS

# FIG. 5

AREA IN WHICH FLAWS ARE NOT
DETECTABLE AREA REDUCTION

FIG. 6

FIG. 7A

FIG. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005221265 A